# EUROPÄISCHE PATENTSCHRIFT

(11) **EP 1 185 983 B1**
(45) Veröffentlichungstag und Bekanntmachung des Hinweises auf die Patenterteilung: **29.09.2004**
(21) Anmeldenummer: 00945745.8
(22) Anmeldetag: 14.06.2000
(51) Int. Cl.: G11B 7/24, G11B 7/26

(54) **VORRICHTUNG UND VERFAHREN ZUM BESCHICHTEN EINES OPTISCH LESBAREN DATENTRÄGERS UND OPTISCHER DATENTRÄGER**
DEVICE AND METHOD FOR COATING AN OPTICALLY READABLE DATA CARRIER AND OPTICALLY READABLE DATA CARRIER
DISPOSITIF ET PROCEDE DE REVETEMENT D'UN SUPPORT DE DONNEES A LECTURE OPTIQUE ET SUPPORT DE DONNEES A LECTURE OPTIQUE

(30) Priorität: 16.06.1999 DE 19927515
(43) Veröffentlichungstag der Anmeldung: 13.03.2002
(73) Patentinhaber: Steag HamaTech AG, 75447 Sternenfels (DE)
(72) Erfinder: SPEER, Ulrich, D-75239 Eisingen (DE)
(74) Vertreter: Wagner, Karl H., Dipl.-Ing.
(86) Internationale Anmeldenummer: PCT/EP2000/005439
(87) Internationale Veröffentlichungsnummer: WO 2000/077781

(56) Entgegenhaltungen:
- EP-A- 0 384 041
- EP-A- 0 405 582
- EP-A- 0 463 382
- EP-A- 0 485 366
- EP-A- 0 732 871
- EP-A- 0 855 703
- EP-A- 0 865 038
- EP-A- 0 886 268
- GB-A- 2 312 777

## Beschreibung

Die vorliegende Erfindung bezieht sich auf eine Vorrichtung und ein Verfahren zum Beschichten eines optisch lesbaren Datenträgers, sowie auf einen optisch lesbaren Datenträger.

Optische Datenträger, wie z. B. CD's, sowie Verfahren und Vorrichtungen zur Herstellung desselben sind in der Technik zahlreich bekannt. Derartige Datenträger besitzen in der Regel eine Daten tragende Oberfläche, welche gegenüber Umweitbedingungen geschützt werden muß. Um die Oberfläche zu schützen, wurde in der Vergangenheit ein aushärtender Lack verwendet, der in einem Mittelbereich auf den sich rasch drehenden Datenträger aufgebracht wurde, um durch die Zentrifugalkraft nach außen zu fließen und eine im wesentlichen gleichmäßige Schicht auf der CD zu bilden. Dabei muß der Datenträger jedoch mit einer hohen Geschwindigkeit gedreht werden, um ausreichende Zentrifugalkräfte für einen gleichmäßige Verteilung des Lacks auf der zu schützenden Oberfläche zu erzeugen. Dieser Vorgang birgt die Gefahr einer Beschädigung des Datenträgers in sich. Darüber hinaus wird bei diesem Verfahren überschüssiger Lack von dem Datenträger abgeschleudert, der nachfolgend aufwendig entsorgt werden muß.

Aus der EP-A-0 855 703 ist ferner ein Verfahren zum Verkleben von zwei scheibenförmigen Substraten eines Datenträgers mit einer zweiseitig klebenden Klebefolie bekannt. Bei dem hierbei bekannten Verfahren werden die Substrate derart miteinander verklebt, daß die informationstragenden Oberflächen der Substrate nach Außen weisen und somit den Umwelteinflüssen ausgesetzt sind.

Ferner sei auf die EP-A-0 485 366 hingewiesen, die ein Verfahren zur Herstellung optischer Datenkarten beschreibt, bei dem eine Datentragende, reflektierende Schicht über eine Kleberschicht mit einem Schutzfilm verklebt wird.

Außerdem sei auf die GB-A-2 312 777, auf welche sich die Präambel von Anspruch 27 bezicht, hingewiesen, die eine Schutzabdeckung für die Labelseite einer CD beschreibt, die nachträglich von außen auf die CD geklebt wird. Die Schutzabdeckung besteht aus einer transparenten Abdeckung mit daran befindlichem Kleber. Die Schutzabdeckung wird derart angebracht, dass zunächst ein Benetzungsmittel auf die Kleberschicht aufgebracht wird und die Schutzabdekkung dann manuell auf der CD positioniert wird, um nachfolgend angedrückt zu werden.

Darüber hinaus ist aus der EP-A-0 732 871 eine Vorrichtung zum kontinuierlichen Liefern eines Films bestehend aus einem Trägerfilm, einer photoempfindlichen Harzschicht und einem Abdeckfilm in einer Laminiervorrichtung beschrieben.

Ausgehend von diesem Verfahren liegt der vorliegenden Erfindung die Aufgabe zugrunde, ein vereinfachtes und kostengünstiges Verfahren zum Beschichten eines optisch lesbaren Datenträgers sowie einen derart hergestellten Datenträger vorzusehen.

Diese Aufgabe wird erfindungsgemäß bei einem Verfahren zum Beschichten eines optisch lesbaren Datenträgers dadurch gelöst, daß eine transparente Klebefolie auf eine zu schützende Oberfläche des Datenträgers aufgebracht wird und anschließend eine Deckfolie auf die Klebefolie aufgebracht wird. Die Verwendung einer Klebefolie in Kombination mit einer Deckfolie besitzt den Vorteil, daß der oben genannte Schleudervorgang zum Beschichten des Datenträgers mit einem Lack entfällt und keine abgeschleuderten Lackreste, die aufwendig entsorgt werden müssen, entstehen. Die Kombination aus Klebefolie und Deckfolie sieht ferner einen guten Schutz der datentragenden Oberfläche des Datenträgers vor. Die Klebefolie und die Deckfolie können bestimmte optische Eigenschaften aufweisen, um das Lesen der auf dem Datenträger befindlichen Daten zu erlauben. Das Aufbringen der Folien sieht eine besonders einfache und kostengünstige Lösung für die Beschichtung eines Datenträgers vor.

Die transparente Klebefolie ist eine Schicht eines Klebers ohne ein Trägermaterial, um das Lesen der Daten auf dem Datenträger nicht zu beeinflussen. Die transparente Deckfolie ist vorzugsweise ein sogenanntes PC-Tape, daß gute optische Eigenschaften für ein Lesegerät des Datenträgers aufweist

Gemäß einer bevorzugten Ausführungsform der Erfindung werden die Klebefolie und/oder die Deckfolie während oder nach dem Aufbringen auf dem Datenträger von einer Trägerfolie abgezogen. Die Trägerfolie besitzt den Vorteil, daß die jeweilige Folie vor ihrem Aufbringen auf den Datenträger geschützt ist und der Klebefolie eine ausreichende Stabilität für einen Transport gibt. Zusätzlich wird vorzugsweise vor dem Aufbringen der Klebefolie und/oder der Deckfolie eine Schutzfolie abgezogen, die die von der Trägerfolie wegweisende Oberfläche der jeweiligen Folie vor Verunreinigungen sowie Beschädigungen schützt.

Vorteilhafterweise entspricht die Form und Größe der Klebefolie und/oder der Deckfolie der zu schützenden Oberfläche des Datenträgers, um diese vollständig abzudecken. Dabei sind vorteilhafterweise der Form und Größe des Datenträgers entsprechende Abschnitte der Klebefolie und/oder der Deckfolie auf der Trägerfolie ausgestanzt.

Vorzugsweise wird die Klebefolie und/oder die Deckfolie zentriert auf die zu schützende Oberfläche des Datenträgers aufgebracht, um eine gleichmäßige Beschichtung der Oberfläche des Datenträgers sicherzustellen. Hierzu werden die Klebefolie und/oder die Deckfolie und der Datenträger vorzugsweise vor dem Aufbringen zueinander ausgerichtet.

Bei einer besonders bevorzugten Ausführungsform der Erfindung wird die Klebefolie und/oder die Deckfolie über eine sich drehende Andrückrolle auf den Datenträger gedrückt, um einen sicheren Kontakt zwischen der jeweiligen Folie und dem Datenträger sicherzustellen. Dabei wird der Anpreßdruck der Andrückrolle vorzugsweise gesteuert, um eine optimale Klebewirkung der jeweiligen Folien erreichen.

Vorzugsweise wird die Klebefolie und/oder die Deckfolie vor dem Andrücken durch die Andrückrolle unter einem vorgegebenen Winkel zur Oberfläche des Datenträgers gehalten, um die Klebefolie beabstandet vom Datenträger zu halten, und ein kontrolliertes Andrücken ausschließlich im Bereich der Andrückrolle sicherzustellen. Hierdurch wird erreicht, daß Lufteinschlüsse zwischen der Klebefolie und der Oberfläche des Datenträgers und/oder zwischen der Klebefolie und der Deckfolie vermieden werden.

Gemäß einer bevorzugten Ausführungsform der Erfindung werden der Datenträger und die Andrückrolle relativ zueinander bewegt, um ein fortschreitendes Aufbringen der Klebefolie auf der Oberfläche des Datenträgers zu ermöglichen. Vorteilhafterweise wird dabei der Datenträger linear an der Andrückrolle vorbeibewegt, und die Andrückrolle wird vorteilhafterweise synchron mit der Bewegung des Datenträgers gedreht, um die Klebefolie fortlaufend auf den Datenträger zu drücken.

Die der Erfindung zugrundeliegende Aufgabe wird auch durch eine Vorrichtung zum Beschichten eines optisch lesbaren Datenträgers mit einer ersten Laminierstation zum Aufbringen einer transparenten Klebefolie auf eine zu schützende Oberfläche des Datenträgers und einer zweiten Laminierstation zum aufbringen einer transparenten Deckfolie gelöst. Bei einer derartigen Vorrichtung werden die oben bezüglich des Verfahrens genannten Vorteile erreicht. Insbesondere entfällt bei einer derartigen Vorrichtung die Gefahr der Beschädigung des Datenträgers durch den Schleudervorgang, und ferner entfällt die aufwendige Aufbearbeitung und Entsorgung von abgeschleuderten Lackresten.

Die Aufgabe wird ferner durch einen optisch lesbaren Datenträger gelöst, der eine transparente Klebefolie und eine Deckfolie auf seiner datentragenden Oberfläche aufweist. Die Kombination aus Klebefolie und Deckfolie führt zu den schon oben genannten Vorteilen. Gemäß einer derzeitig bevorzugten Ausführungsform der Erfindung ist der Datenträger in einem Schutzgehäuse angeordnet, welches den Datenträger umgibt. Durch die Verwendung eines Schutzgehäuses werden die mechanischen Anforderungen an die Kombination aus Klebefolie und Deckfolie stark verringert, da diese keine stärkeren Belastungen abhalten muß, sondern hauptsächlich als Schutzschicht gegen Verschmutzungen und chemikalische Einflüsse dient

Die Erfindung wird nachstehend anhand bevorzugter Ausführungsbeispiele unter Bezugnahme auf die Figuren näher erläutert. Es zeigen:
- Fig. 1: eine schematische Darstellung einer Vorrichtung zum Herstellen von optischen Datenträgern gemäß der Erfindung;
- Fig. 2: eine schematische Ansicht von Teilen einer Laminierstation gemäß der vorliegenden Erfindung;
- Fig. 3: eine Seitenansicht einer alternativen Ausführungsform einer Laminierstation gemäß der Erfindung;
- Fig. 4: eine schematische Seitenansicht eines optischen Datenträgers gemäß der Erfindung.

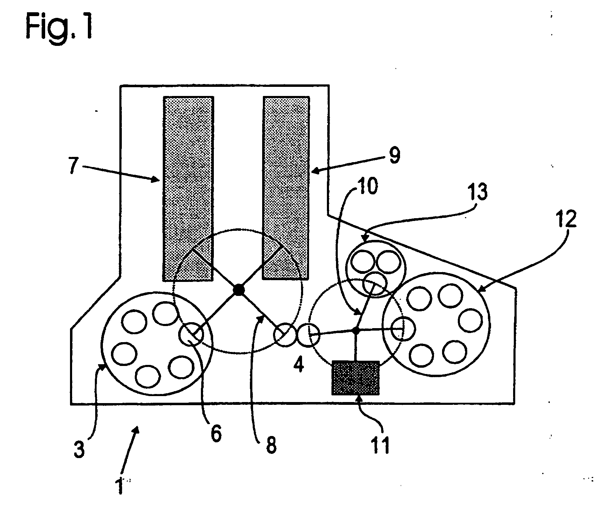

Figur 1 zeigt eine Vorrichtung 1 zur Herstellung eines optischen Datenträgers mit wenigstens einer zu schützenden Oberfläche.

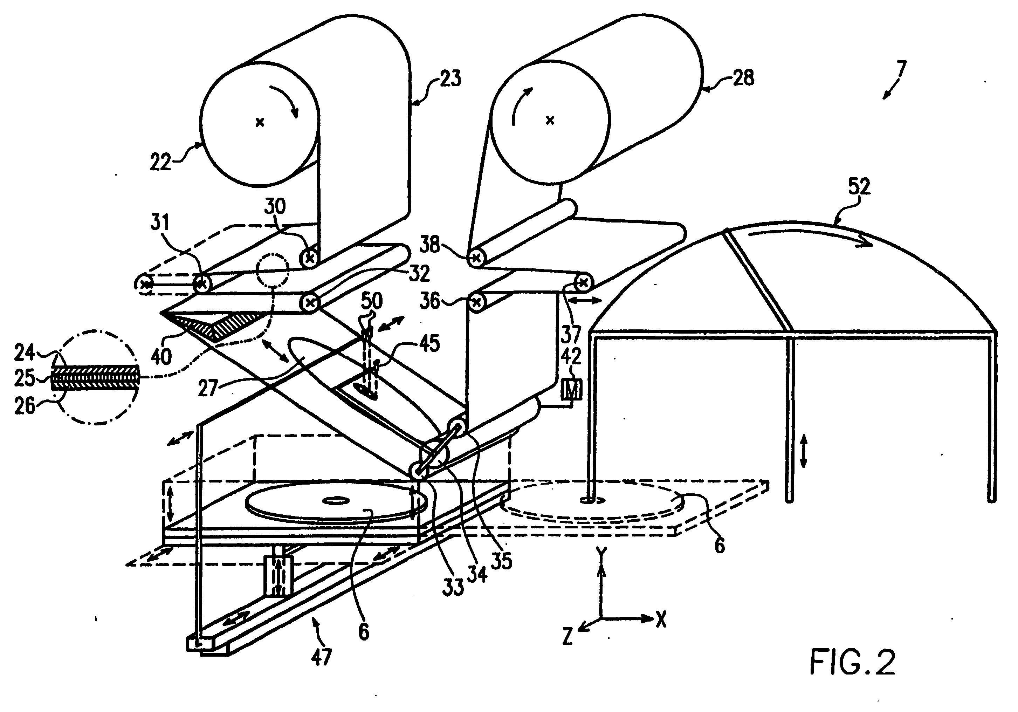

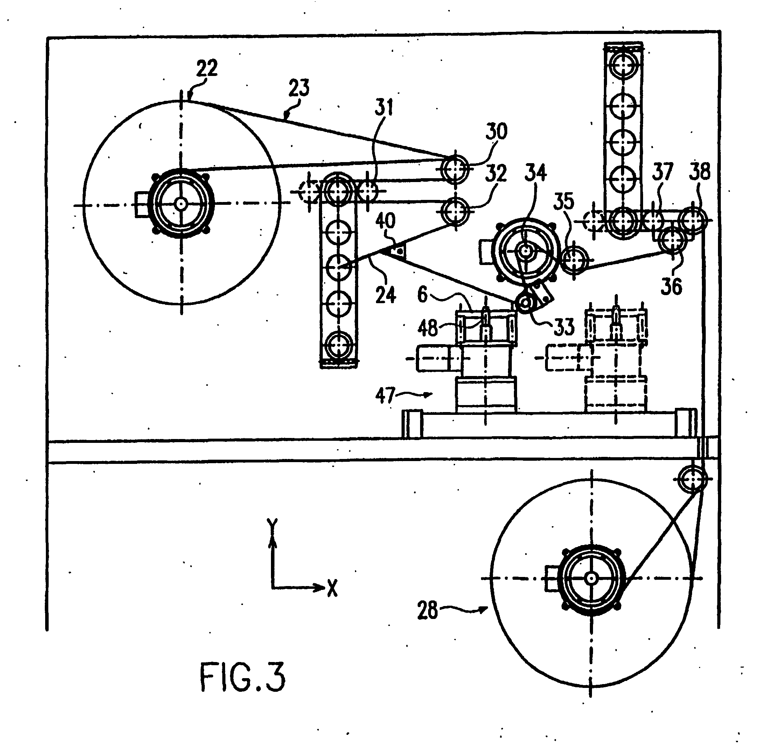

Die Vorrichtung weist eine Zuführeinheit 3 für die Zuführung eines optischen Datenträgers 6, wie beispielsweise einer CD oder einer DVR, auf. Aus der ersten Zuführeinheit 3 wird der Datenträger 6 zu einer ersten Laminierstation 7 befördert, welche in größerer Einzelheit unter Bezugnahme auf die Figuren 2 und 3 beschrieben wird. In der Laminierstation 7 wird ein druckempfindliches Klebeband bzw. eine -folie, die als PSA-Tape bekannt ist, auf die zu schützende Oberfläche des optischen Datenträgers 6 aufgebracht. Dabei ist unter dem Begriff Klebeband bzw. -folie eine Schicht aus einem Kleber ohne Trägermaterial zu verstehen. Die optischen Eigenschaften einer solchen Kleberschicht lassen sich in der Regel genauer und besser kontrollieren, als die eines beschichteten Trägermaterials. Die Klebefolie weist abhängig von dem daran angelegten Druck unterschiedliche Adhäsionseigenschaften auf.

Anschließend wird der Datenträger 6 über eine Handhabungsvorrichtung 8 in eine zweite Laminierstation 9 befördert. In der zweiten Laminierstation 9 wird eine Schutz- oder Deckfolie auf die Klebefolie aufgebracht. Die zweite Laminierstation 9 ist im wesentlichen identisch zu der ersten Laminierstation 7, wobei der Hauptunterschied in der verwendeten Laminierfolie liegt. Die in der zweiten Laminierstation aufgebrachte Deckfolie ist beispielsweise ein sogenanntes PC-Tape, daß die für einen Datenträger des DVR Typs erforderlichen optischen Eigenschaften aufweist.

Nach dem Auflaminieren der Deckfolie wird der Datenträger über eine Handhabungsvorrichtung 10 in eine Qualitätsüberprüfungseinheit 11 befördert. Nach der Qualitätsüberprüfung wird der Datenträger entweder auf einer Sammelstation 12 für gute Datenträger oder auf einer Sammelstation 13 für defekte Datenträger abgelegt.

Die Vorrichtung 1 ist in einem Reinraum angeordnet, in dem die jeweiligen Arbeitsschritte unter Reinstraumbedingungen durchgeführt werden können.

Die Figuren 2 und 3 zeigen schematische Darstellungen einer Laminierstation 7 gemäß der vorliegenden Erfindung, wobei die in Figur 2 und 3 gezeigten Laminierstationen zum Teil unterschiedliche Anordnungen der jeweiligen Bauteile aufweisen. In der folgenden Beschreibung der Laminierstationen gemäß den Figuren 2 und 3 werden jedoch dieselben Bezugszeichen verwendet, soweit identische bzw. gleichartige Bauteile betroffen sind.

Die Laminierstation 7 weist eine Zuführrolle 22 auf, auf die eine bandförmige Laminierfolie 23 aufgerollt ist. Die Laminierfolie 23 besteht aus insgesamt drei Folien, nämlich einer Schutzfolie 24, einer Klebefolie 25, die eine Schicht eines Klebers ohne Trägermaterial ist, und einer Trägerfolie 26, wie am besten in dem vergrößerten Kreisausschnitt in Figur 2 zu erkennen ist. Die Klebefolie 25 weist Abschnitte 27 auf, die entsprechend der Größe und Form einer zu beschichtenden Oberseite des Datenträgers 6 ausgestanzt sind.

Die Laminierstation weist ferner eine Aufnahmerolle 28 auf, auf die Reste der Laminierfolie 23 nach einem Laminiervorgang aufgenommen werden. Zwischen der Zuführrolle 22 und der Aufnahmerolle 28 ist die Laminierfolie 23 um eine Vielzahl von Rollen 30 bis 38 geführt, um einen definierten Bewegungspfad der bandförmigen Laminierfolie 23 zwischen den Rollen 22 und 28 vorzusehen. Die jeweiligen Rollen 30 bis 38 sind um ihre jeweilige Drehachse drehbar, und die Rollen 31 und 37 sind als sogenannte Tänzerrollen ausgebildet, welche in Horizontalrichtung beweglich gelagert sind, um einen Längenausgleich der Laminierfolie 23 zwischen den Rollen 22 und 28 zu ermöglichen. Hierdurch können die Rollen 22 und 28 trotz diskontinuierlicher Laminierzyklen, wie nachfolgend beschrieben wird, mit konstanter Geschwindigkeit gedreht werden. Die nicht benötigten Teile der Klebefolie 25 können vorab, d. h. vor dem Einführen der Laminierfolie in die Laminierstation, z. B. bei der Herstellung der Laminierfolie, entfernt werden, oder sie können an der Folie verbleiben, um eine gleichmäßige Dicke der Folie 23 über die gesamte Breite und Länge derselben, zumindest vor einem Laminiervorgang, sicherzustellen.

Die Laminierfolie 23 ist um ein keilförmiges Rakel 40 geführt, an dem die Laminierfolie 23 scharf umgelenkt wird, um ein Abziehen der Schutzfolie 24 von der Laminierfolie 23 zu ermöglichen, so daß eine Seite der Klebefolie 25 zum Verkleben mit dem optischen Datenträger 6 freigelegt wird. Das Abziehen der Schutzfolie 24 ist am besten in Figur 3 zu erkennen. Die Schutzfolie 24 wird nach dem Abziehen auf eine nicht näher dargestellten Rolle aufgerollt. Anstelle des keilförmigen Rakels kann auch eine alternative Form einer Folien-Abzieheinrichtung verwendet werden.

Nachdem die Laminierfolie 23 um das Rakel 40 geführt ist, wird es unter einem Winkel bezüglich einer Horizontalen um die tiefer liegende Rolle 33 geführt, welche als Andrückrolle ausgebildet ist. Nach der Rolle 33 wird die Laminierfolie 23 um die Welle 34 geführt, welche über einen Motor 42 angetrieben wird.

Dabei bewirkt eine Drehung der angetriebenen Rolle 34 eine entsprechende Drehung der Andrückrolle 33 sowie einer nachgeordneten Rolle 35, die als reine Führungsrolle ausgebildet ist.

Die Laminierstation 7 weist einen ersten Sensor 45 auf, der mit der angetriebenen Rolle 34 assoziiert ist und in der Lage ist, Konturen der ausgestanzten Abschnitte 27 der Klebefolie 25 zu detektieren. Die Laminierfolie 23 wird über die angetriebene Rolle 34 in Längsrichtung hin und her gefahren, bis der Sensor 45 eine bestimmte Kontur des ausgestanzten Abschnitts 27, wie z. B. ein ausgestanztes Mittelloch, erkennt. Wenn der Sensor 45 das Mittelloch erkennt, wird er durch Bewegung der Folie direkt über einer Kante des Mittellochs positioniert, wodurch eine genaue Ausrichtung des Abschnitts 27 bezüglich der Rolle 34 und insbesondere der Andrückrolle 33 in Längsrichtung der Laminierfolie 23 erreicht wird.

Die Laminierstation 7 weist femer eine Auflage- und Transporteinheit 47 für den zu laminierenden Datenträger 6 auf. Die Auflage- und Transporteinheit 47 bildet eine horizontale Auflage für den Datenträger 6 und ist über geeignete, nicht näher dargestellte Bewegungsvorrichtungen in alle Richtungen bewegbar. Ober einen versenkbaren Zentrierstift 48 wird eine genaue Ausrichtung des Datenträgers 6 auf der Auflage- und Transporteinheit 47 sichergestellt. Der Stift 48 ist während des Laminiervorgangs versenkbar, um ihn nicht zu beeinträchtigen. Dies wird dadurch erreicht, daß er durch eine Feder mit relativ geringer Federkraft nach oben in die in Figur 3 gezeigte Position gedrückt wird. Bei einem Druck von oben auf den Stift wird er entgegen der Federkraft nach unten gedrückt. Alternativ kann der Stift auch Ober einen Zylinder oder einen Motor bewegt werden.

Vor dem Laminieren des Datenträgers 6 wird die Transport- und Auflageeinheit 47 in X-Richtung, welche der Längsrichtung der Laminierfolie 23 entspricht, gegen einen Anschlag gefahren. Hierdurch wird sichergestellt, daß der Datenträger 6 und der zuvor in Längsrichtung ausgerichtete Abschnitt 27 der Klebefolie 25 zueinander ausgerichtet sind. Anschließend wird die Transport- und Auflageeinheit 47 in Z-Richtung, die quer zur Längsrichtung der Laminierfolie 23 verläuft, hin und her gefahren. Ober ein der Transport- und Auflageeinheit 47 zugeordnetes Sensorpaar 50 wird eine Kontur, wie beispielsweise die Kontur eines Mittellochs, des ausgestanzten Abschnitts 27 der Klebefolie 25 detektiert, was eine seitliche Ausrichtung des Datenträgers 6 bezüglich des Abschnitts 27 ermöglicht.

Nachdem der Datenträger 6 in obiger Weise sowohl in X-Richtung als auch in Z-Richtung bezüglich des Abschnitts 27 der Klebefolie 25 ausgerichtet ist, wird die Transport- und Auflageeinheit 47 in Y-Richtung hochgefahren. Nun wird die Rolle 34 Ober den Motor 42 angetrieben, was bewirkt, daß sich die Laminierfolie 23 in X-Richtung bewegt. Gleichzeitig und synchronisiert mit der Drehung wird die Transport- und Auflageeinheit 47 in X-Richtung bewegt. Dabei kommt der Abschnitt 27 mit der zu schützenden Oberfläche des Datenträgers 6 in Kontakt und wird durch die Andrückrolle 33 so dagegen gepreßt, daß sie an dem Datenträger 6 anhaftet und sich von der Trägerfolie 26 löst. Durch die synchronisierte Bewegung der Antriebsrolle 34 mit der Transport- und Auflageeinheit 47 wird ein Abschnitt 27 der Klebefolie 25 zentriert auf den Datenträger 6 aufgebracht, so daß der Abschnitt 27 der Folie 25 die zu schützende Seite des Datenträgers 6 vollständig abdeckt und nicht über den Rand vorsteht. Der Anpreßdruck der Andrückrolle wird Ober die Position der Transport- und Auflageeinheit 47 in Y-Richtung gesteuert, um die Adhäsionseigenschaften der druckempfindlichen Klebefolie einzustellen. Alternativ kann natürlich auch die Andrückrolle 33 in Richtung der Transport- und Auflageeinheit bewegt werden. Für eine gute Einstellung bzw. einen guten Ausgleich des Anpreßdrucks kann ein gefedertes Aufhängungssystem vorgesehen werden. Die Aufhängung kann über eine Feder oder einen Druckluftzylinder erfolgen.

Anschließend wird der so mit dem Abschnitt 27 der Klebefolie 25 versehene Datenträger 6 über die Handhabungsvorrichtung 8, die beispielsweise einen Innenlochgreifer aufweist, von der Transport- und Auflageeinheit 47 entnommen und zur zweiten Laminierstation 9 befördert.

Ein neuer Datenträger 6 wird auf die Transport- und Auflageeinheit 47 der Laminerstation 7 geladen, und der Vorgang wird wiederholt. Wie schon oben erwähnt, drehen sich die Rollen 22 und 28 kontinuierlich während des ganzen Vorgangs, obwohl der Klebevorgang diskontinuierlich abläuft. Der daher erforderliche Längenausgleich der Laminierfolie 23 wird, wie schon erwähnt, über eine Horizontalbewegung der Tänzerrollen 31 und 37 erreicht.

Die zweite Laminierstation 9 weist denselben Aufbau auf, wie die erste Laminierstation 7 und daher wird die zweite Laminierstation 9 nicht näher beschrieben. Die in der zweiten Laminierstation verwendete Laminierfolie weist im wesentlichen denselben Aufbau auf wie die Laminierfolie 23, mit der Ausnahme, daß statt der Klebefolie 25 eine Schutz- oder Deckfolie, insbesondere ein PC-Tape vorgesehen ist.

Obwohl die Laminierfolien gemäß obiger Beschreibung jeweils drei Schichten, nämlich eine Schutzfolie 24, eine Klebe-/Deckfolie 25 und eine Trägerfolie 26, aufweisen, sei bemerkt, daß eine Schutzfolie 24 nicht zwingend notwendig ist. Falls jedoch keine Schutzfolie 24 verwendet wird, sollten wenigstens die Rollen 30 und 32 speziell beschichtet sein, um ein Vergeben bzw. eine Beschädigung der dann freiliegenden Klebe-Deckfolie 25 an diesen Rollen zu verhindern.

Alternativ könnten auch die Führungsrollen, bis auf die Rolle 33, weggelassen worden, wobei in diesem Fall die Rollen 22 und 28 derart gesteuert werden messen, daß eine Ausrichtung der Abschnitte 27 sowie eine mit der Transport- und Auflageeinheit 47 synchronisierte Bewegung der Laminierfolie 23 erreicht wird.

Anstelle der Sensoren 45 und 50 könnte auch ein einzelner Sensor, wie beispielsweise eine Kamera, für die obigen Ausrichtungsvorgänge verwendet werden.

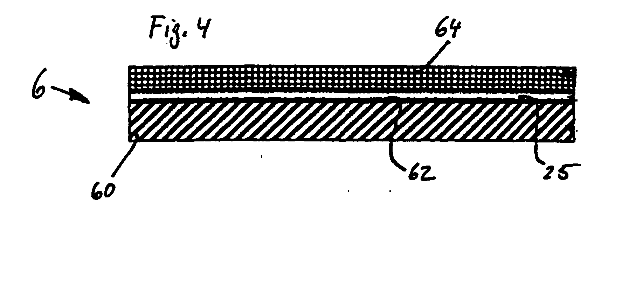

Figur 4 zeigt eine schematische Seitenansicht eines erfindungsgemäßen Datenträgers 6, der in der zuvor beschriebenen Weise hergestellt wurde. Der Datenträger weist eine PC-Scheibe mit einer Dicke von ungefähr 1,1 mm auf. Die PC-Scheibe weist eine datentragende Oberseite 62 auf, auf der die Klebefolie 25, wie zuvor beschrieben, aufgebracht ist. Die Klebefolie 25 wird durch eine ungefähr 25 µm dicke Kleberschicht gebildet. Auf der Klebefolie ist das PC-Tape 64 vorgesehen, das in der zuvor beschriebenen Art und Weise auflaminiert wurde. Das PC-Tape 64 besitzt eine Dicke von ungefähr 75 µm. Durch das PC-Tape 64 erhält der Datenträger die erforderlichen optische Eigenschaften für eine DVR. Der Datenträger kann beispielsweise nach Art einer Diskette innerhalb eines ihn umgebenden Gehäuse angeordnet sein, was die mechanischen Anforderungen an die Beschichtung stark verringert.

Die Erfindung wurde zuvor anhand bevorzugter Ausführungsbeispiele der Erfindung beschrieben, ohne jedoch auf die speziellen Ausführungsbeispiele beschränkt zu sein. Insbesondere ist die Erfindung nicht auf die zuvor genannten Materialien und Maßangaben beschränkt.

## Patentansprüche

1. Verfahren zum Beschichten eines optisch lesbaren Datenträgers (6), bei dem eine transparente Klebefolie (25) auf eine zu schützende Oberfläche des Datenträgers (6) und anschließend eine transparente Deckfolie (64) auf die Klebefolie (25) aufgebracht wird.

2. Verfahren nach Anspruch 1, **dadurch gekennzeichnet, daß** die Klebefolie (25) aus einer Schicht eines Klebers ohne Trägermaterial besteht.

3. Verfahren nach Anspruch 1 oder 2, **dadurch gekennzeichnet, daß** die Deckfolie ein PC-Tape ist.

4. Verfahren nach einem der vorhergehenden Ansprüche, **dadurch gekennzeichnet, daß** die Klebefolie (25) und/oder die Deckfolie während oder nach dem Aufbringen auf dem Datenträger (6) von einer Trägerfolie (26) abgezogen werden.

5. Verfahren nach einem der vorhergehenden Ansprüche, **dadurch gekennzeichnet, daß** vor dem Aufbringen eine Schutzfolie von der Klebefolie (25) und/oder der Deckfolie abgezogen wird.

6. Verfahren nach einem der vorhergehenden Ansprüche, **dadurch gekennzeichnet, daß** die Form und Größe der Klebefolie (25) und/oder der Deckfolie der zu schützenden Oberfläche des Datenträgers (6) entspricht.

7. Verfahren nach Anspruch 6, **dadurch gekennzeichnet, daß** der Form und Größe des Datenträgers (6) entsprechende Abschnitte (27) der Klebefolie (25) und/oder der Deckfolie auf der Trägerfolie (26) ausgestanzt sind.

8. Verfahren nach einem der vorhergehenden Ansprüche, **dadurch gekennzeichnet, daß** die Klebefolie (25) und/oder die Deckfolie zentriert auf der zu schützenden Oberfläche des Datenträgers (6) aufgebracht werden.

9. Verfahren nach Anspruch 8, **dadurch gekennzeichnet, daß** die Klebefolie (25) und der Datenträger (6) vor dem Aufbringen zueinander ausgerichtet werden.

10. Verfahren nach einem der vorhergehenden Ansprüche, **dadurch gekennzeichnet, daß** die Klebefolie (25) und/oder die Deckfolie während dem Aufbringen über eine sich drehende Andrückrolle (33) auf den Datenträger (6) gedrückt werden.

11. Verfahren nach Anspruch 10, **dadurch gekennzeichnet, daß** der Anpreßdruck der Andrückrolle (33) gesteuert wird.

12. Verfahren nach einem der vorhergehenden Ansprüche, **dadurch gekennzeichnet, daß** die Klebefolie (25) und/oder die Deckfolie vor dem Andrücken durch die Andrückrolle (33) unter einem vorgegebenen Winkel zur Oberfläche des Datenträgers (6) gehalten werden.

13. Verfahren nach einem der vorhergehenden Ansprüche, **dadurch gekennzeichnet, daß** der Datenträger (6) und die Andrückrolle (33) relativ zueinander bewegt werden.

14. Verfahren nach Anspruch 13, **dadurch gekennzeichnet, daß** der Datenträger (6) linear an der Andrückrolle (33) vorbei bewegt wird.

15. Verfahren nach Anspruch 13 oder 14, **dadurch gekennzeichnet, daß** die Andrückrolle (33) synchronisiert mit der Relativbewegung des Datenträgers (6) gedreht wird.

16. Verfahren nach einem der vorhergehenden Ansprüche, **dadurch gekennzeichnet, daß** die Klebefolie (25) eine auf Druck ansprechende Klebefolie ist, deren Adhäsionseigenschaften abhängig vom Anpreßdruck variieren.

17. Vorrichtung zum Beschichten eines optisch lesbaren Datenträgers (6), mit einer ersten Laminierstation (7) zum Aufbringen einer transparenten Klebefolie (25) auf eine zu schützende Oberfläche des Datenträgers (6) und einer zweiten Laminierstation zum Aufbringen einer transparenten Deckfolie (64) auf die Klebefolie (25).

18. Vorrichtung nach Anspruch 17, **dadurch gekennzeichnet, daß** die Form und Größe der Klebefolie (25) und/oder der Deckfolie der zu schätzenden Oberfläche des Datenträgers (6) entspricht

19. Vorrichtung nach Anspruch 17 oder 18, **dadurch gekennzeichnet, daß** der Form und Größe der zu schützenden Oberfläche des Datenträgers (6) entsprechende Abschnitte (27) der Klebefolie (25) und/oder der Deckfolie auf einer Trägerfolie (26) ausgestanzt sind.

20. Vorrichtung nach einem der Ansprüche 17 bis 19, **dadurch gekennzeichnet, daß** wenigstens eine der Laminierstationen (7) eine Ausrichteinheit zum Ausrichten der Klebefolie (25) mit der zu schützenden Oberfläche des Datenträgers (6) aufweist.

21. Vorrichtung nach einem der Ansprüche 17 bis 20, **dadurch gekennzeichnet, daß** wenigstens eine der Laminierstationen (7) eine drehbare Andrückrolle (33) aufweist

22. Vorrichtung nach einem der Ansprüche 17 bis 21, **dadurch gekennzeichnet, daß** wenigstens einer der Laminierstationen (7) eine Einrichtung zum Bewegen des Datenträgers (6) und/oder der Andrückrolle (33) aufweist

23. Vorrichtung nach Anspruch 22, **dadurch gekennzeichnet, daß** die Einrichtung wenigstens eine Linearbewegungseinheit (47) für den Datenträger (6) aufweist.

24. Vorrichtung nach einem der Ansprüche 17 bis 23, **gekennzeichnet durch** eine Vorrichtung zum Abziehen einer Schutzfolie (24) von der Klebefolie (25) und/oder der Deckfolie.

25. Vorrichtung nach einem der Ansprüche 17 bis 24, **dadurch gekennzeichnet, daß** die Klebefolie (25) eine Schicht eines Klebers ohne Trägermaterial ist.

26. Vorrichtung nach einem der Ansprüche 17 bis 25, **dadurch gekennzeichnet, daß** die Deckfolie ein PC-Tape ist.

27. Optisch lesbarer Datenträger (6) dessen Daten tragende Oberfläche mit einer transparenten Klebefolie (25) und einer Deckfolie (64) abgedeckt ist, **dadurch gekennzeichnet, daß** die Klebefolie (25) eine Schicht eines Klebermaterials ohne Trägermaterials ist und dadurch, daß die Deckfolie (64) transparent ist.

28. Datenträger nach Anspruch 27 , **dadurch gekennzeichnet, daß** die Deckfolie ein PC-Tape ist.

29. Datenträger nach einem der Ansprüche 27 oder 28, **dadurch gekennzeichnet, daß** der Datenträger (6) in einem Schutzgehäuse angeordnet ist.

## Claims

1. Method of coating an optically readable data carrier (6), in which a transparent adhesive film (25) is supplied to a surface, which is to be protected, of the data carrier (6) and subsequently a transparent cover film (64) is applied to the adhesive film (25).

2. Method according to claim 1, **characterised in that** the adhesive film (25) consists of a layer of adhesive without carrier material.

3. Method according to claim 1 or 2, **characterised in that** the cover film is a PC tape.

4. Method according to one of the preceding claims, **characterised in that** the adhesive film (25) and/or the cover film is or are drawn off a carrier film (26) during or after application to the data carrier (6).

5. Method according to one of the preceding claims, **characterised in that** a protective film is drawn off the adhesive film (25) and/or the cover film before the application.

6. Method according to one of the preceding claims, **characterised in that** the shape and size of the adhesive film (25) and/or the cover film correspond with the surface, which is to be protected, of the data carrier (6).

7. Method according to claim 6, **characterised in that** sections (27), which correspond with the shape and size of the data carrier (6), of the adhesive film (25) and/or the cover film are punched out on the carrier film (26).

8. Method according to one of the preceding claims, **characterised in that** the adhesive film (25) and/or the cover film are applied centred to the surface, which is to be protected, of the data carrier (6).

9. Method according to claim 8, **characterised in that** the adhesive film (25) and the data carrier (8) are aligned relative to one another before the application.

10. Method according to one of the preceding claims, **characterised in that** the adhesive film (25) and/or the cover film are pressed onto the data carrier (6) by way of a rotating presser roller (33) during the application.

11. Method according to claim 10, **characterised in that** the pressing pressure of the presser roller (33) is controlled.

12. Method according to one of the preceding claims, **characterised in that** the adhesive film (25) and/or the cover film are held at a predetermined angle relative to the surface of the data carrier (6) prior to the pressing by the presser roller (33).

13. Method according to one of the preceding claims, **characterised in that** the data carrier (6) and the presser roller (33) are moved relative to one another.

14. Method according to claim 13, **characterised in that** the data carrier (6) is moved linearly past the presser roller (33).

15. Method according to claim 13 or 14, **characterised in that** the presser roller (33) is rotated synchronously with the relative movement of the data carrier (6).

16. Method according to one of the preceding claims, **characterised in that** the adhesive film (25) is a pressure-responsive adhesive film, the adhesion characteristics of which vary in dependence on the pressing pressure.

17. Device for coating an optically readable data carrier (6), comprising a first laminating station (7) for application of a transparent adhesive film (25) to a surface, which is to be protected, of the data carrier (6) and a second laminating station for application of a transparent cover film (64) to the adhesive film (25).

18. Device according to claim 17, **characterised in that** the shape and size of the adhesive film (25) and/or the cover film correspond with the surface, which is to be protected, of the data carrier (6).

19. Device according to claim 17 or 18, **characterised in that** sections (27), which correspond with the shape and size of the surface of the data carrier (6) to be protected, of the adhesive film (25) and/or the cover film are punched out on a carrier film (26).

20. Device according to one of claims 17 to 19, **characterised in that** at least one of the laminating stations (7) comprises an aligning unit for aligning the adhesive film (25) with the surface, which is to be protected, of the data carrier (6).

21. Device according to one of claims 17 to 20, **characterised in that** at least one of the laminating stations (7) comprises a rotatable presser roller (33).

22. Device according to one of claims 17 to 21, **characterised in that** at least one of the laminating stations (7) comprises equipment for moving the data carrier (6) and/or the presser roller (33).

23. Device according claim 22, **characterised in that** the equipment comprises at least one linear moving unit (47) for the data carrier (6).

24. Device according to one of claims 17 to 23, **characterised by** a device for drawing a protective film (24) off the adhesive film (25) and/or the cover film.

25. Device according to one of claims 17 to 24, **characterised in that** the adhesive film (25) is a layer of adhesive without carrier material.

26. Device according to one of claims 17 to 25, **characterised in that** the cover film is a PC tape.

27. Optically readable data carrier (6), the data-carrying surface of which is covered by a transparent adhesive film (25) and a cover film (64), **characterised in that** the adhesive film (25) is a layer of an adhesive material without carrier material and **in that** the cover film (64) is transparent.

28. Data carrier according to claim 27, **characterised in that** the cover film is a PC tape.

29. Data carrier according to one of claims 27 and 28, **characterised in that** the data carrier (6) is arranged in a protective housing.

## Revendications

1. Procédé pour l'enduction d'un support de données (6) optiquement lisible, dans lequel un film adhésif (25) transparent est appliqué sur une surface à protéger du support de données (6) et ensuite un film de revêtement (64) transparent est appliqué sur le film adhésif (25).

2. Procédé selon la revendication 1, **caractérisé en ce que** le film adhésif (25) est à base d'une couche d'une colle sans matériau support.

3. Procédé selon la revendication 1 ou 2, **caractérisé en ce que** le film de revêtement est une bande de chlorure de polyvinyle.

4. Procédé selon l'une quelconque des revendications précédentes, **caractérisé en ce que** le film adhésif (25) et/ou le film de revêtement sont retirés d'un film support (26) pendant ou après l'application sur le support de données (6).

5. Procédé selon l'une quelconque des revendications précédentes, **caractérisé en ce qu'**un film protecteur est enlevé du film adhésif (25) et/ou du film de revêtement avant l'application.

6. Procédé selon l'une quelconque des revendications précédentes, **caractérisé en ce que** la forme et la grandeur du film adhésif (25) et/ou du film de revêtement correspondent à la surface à protéger du support de données (6).

7. Procédé selon la revendication 6, **caractérisé en ce que** des parties, correspondant à la forme et à la grandeur du support de données (6), du film adhésif (25) et/ou du film de recouvrement sont découpés sur le film support (26).

8. Procédé selon l'une quelconque des revendications précédentes, **caractérisé en ce que** le film adhésif (25) et/ou le film de revêtement sont appliqués de façon centrée sur la surface à protéger du support de données (6).

9. Procédé selon la revendication 8, **caractérisé en ce que** le film adhésif (25) et le support de données (6) sont orientés l'un vers l'autre avant l'application.

10. Procédé selon l'une quelconque des revendications précédentes, caractérisé en ce le film adhésif (25) et/ou le film de revêtement sont appuyés sur le support de données (6) pendant l'application au moyen d'un galet presseur (33) rotatif.

11. Procédé selon la revendication 10, **caractérisé en ce que** la pression d'appui du galet presseur (33) est contrôlée.

12. Procédé selon l'une quelconque des revendications précédentes, caractérisé en ce le film adhésif (25) et/ou le film de revêtement sont maintenus avant l'appui par le galet presseur (33) en formant un angle prédéfini par rapport à la surface du support de données (6).

13. Procédé selon l'une quelconque des revendications précédentes, **caractérisé en ce que** le support de données (6) et le galet presseur (33) sont déplacés l'un par rapport à l'autre.

14. Procédé selon la revendication 13, **caractérisé en ce que** le support de données (6) est déplacé linéairement en passant devant le galet presseur (33).

15. Procédé selon la revendication 13 ou 14, **caractérisé en ce que** le galet presseur (33) est tourné de façon synchronisée avec le déplacement rotatif du support de données (6).

16. Procédé selon l'une quelconque des revendications précédentes, **caractérisé en ce que** le film adhésif (25) est un film adhésif réagissant à la pression, dont les propriétés d'adhésion varient en fonction de la pression d'appui.

17. Dispositif pour le revêtement d'un support de données (6) optiquement lisible, avec une première station de laminage (7) pour l'application d'un film adhésif (25) transparent sur une surface à protéger du support de données (6) et une seconde station de laminage pour l'application d'un film de revêtement (64) transparent sur le film adhésif (25).

18. Dispositif selon la revendication 17, **caractérisé en ce que** la forme et la grandeur du film adhésif (25) et/ou du film de revêtement correspondent à la surface à protéger du support de données (6).

19. Dispositif selon la revendication 17 ou 18, **caractérisé en ce que** des parties (27), correspondant à la forme et à la grandeur de la surface à protéger du support de données (6), du film adhésif (25) et/ou du film de revêtement sont découpées sur un film support (26).

20. Dispositif selon l'une quelconque des revendications 17 à 19, **caractérisé en ce qu'**au moins une des stations de laminage (7) présente une unité d'orientation pour l'orientation du film adhésif (25) avec la surface à protéger du support de données (6).

21. Dispositif selon l'une quelconque des revendications 17 à 20, **caractérisé en ce qu'**au moins une des stations de laminage (7) présente un galet presseur (33) rotatif.

22. Dispositif selon l'une quelconque des revendications 17 à 21, **caractérisé en ce qu'**au moins une des stations de laminage (7) présente un appareil pour le déplacement du support de données (6) et/ou du galet presseur (33).

23. Dispositif selon la revendication 22, **caractérisé en ce que** l'appareil présente au moins une unité de déplacement linéaire (47) pour le support de données (6).

24. Dispositif selon l'une quelconque des revendications 17 à 23, **caractérisé par** un dispositif pour l'enlèvement d'un film protecteur (24) du film adhésif (25) et/ou du film de revêtement.

25. Dispositif selon l'une quelconque des revendications 17 à 24, **caractérisé en ce que** le film adhésif (25) est une couche d'une colle sans matériau support.

26. Dispositif selon l'une quelconque des revendications 17 à 25, **caractérisé en ce que** le film de revêtement est une bande de chlorure de polyvinyle.

27. Support de données (6) optiquement lisible, dont la surface portant des données est recouverte avec un film adhésif (25) transparent et un film de revêtement (64), **caractérisé en ce que** le film adhésif (25) est une couche d'un matériau de colle sans matériau support, et **en ce que** le film de revêtement (64) est transparent.

28. Support de données selon la revendication 27, **caractérisé en ce que** le film de revêtement est une bande de chlorure de polyvinyle.

29. Support de données selon l'une quelconque des revendications 27 ou 28, **caractérisé en ce que** le support de données (6) est disposé dans un boîtier de protection.
